# EUROPÄISCHE PATENTANMELDUNG

(11) **EP 1 736 345 A1**
(43) Veröffentlichungstag der Anmeldung: **27.12.2006**
(21) Anmeldenummer: 06012373.4
(22) Anmeldetag: 16.06.2006
(51) Int. Cl.: B60K 6/04

(54) **Elektromotorisches Antriebsmodul**

(30) Priorität: 11.11.2005 DE 102005053887; 22.06.2005 DE 102005029305; 16.09.2005 DE 102005044225
(71) Anmelder: ZF FRIEDRICHSHAFEN AG, 88046 Friedrichshafen (DE)
(72) Erfinder: Großpietsch, Wolfgang, 97422 Schweinfurt (DE); Sudau, Jörg, 97464 Niederwerrn (DE); Herbst, Rüdiger, 96191 Viereth-Trunstadt (DE); Kleuker, Christoph, 97469 Gochsheim (DE); Zimmer, Manfred, 97475 Zeil (DE); Busold, Thomas, 36039 Fulda (DE); Matschas, Steffen, 97421 Schweinfurt (DE); Müller, Thorsten, 88048 Friedrichshafen (DE)

(57) **Zusammenfassung**

Es wird ein elektromotorisches Antriebsmodul zum Einbau in einen Kraftfahrzeugantriebsstrang mit einem Verbrennungsmotor und einem Getriebe vorgeschlagen und beschrieben. Das Antriebsmodul umfasst eine elektrische Maschine mit einem Stator und einem Rotor, sowie eine erste und eine zweite Kupplungsvorrichtung, durch welche der Rotor wahlweise mit dem Verbrennungsmotor und/oder mit dem Getriebe zur Übertragung eines Drehmoments koppelbar ist und wobei das Antriebsmodul in einem Gehäuse angeordnet ist.

## Beschreibung

Die Erfindung betrifft ein elektromotorisches Antriebsmodul zum Einbau in einen Kraftfahrzeugantriebsstrang mit einem Verbrennungsmotor und einem Getriebe.

Die Integration von einer oder mehreren elektrischen Maschinen in den Antriebsstrang von Kraftfahrzeugen und die Darstellung von rein elektromotorischen und in Verbindung mit einem Verbrennungsmotor hybriden Antriebssträngen ist bekanntlich seit längerem ein prädestiniertes Entwicklungsthema der Automobilindustrie. Die diesbezüglichen Anstrengungen wurden insbesondere in jüngster Zeit auch aufgrund kontinuierlich steigender Treibstoffkosten und der Forderung nach Reduzierung der Schadstoffemissionen von Verbrennungsmotoren erheblich forciert. Es sind bereits wesentliche technische Fragestellungen zur Integration elektrischer Antriebe in Kraftfahrzeugantriebsstränge grundlegend gelöst, jedoch stehen der Kundenakzeptanz und somit einer raschen Markteinführung bisher insbesondere erhebliche Kostenprobleme gegenüber. Diese resultieren zumindest teilweise daraus, dass für ein Hybridfahrzeug im Sinne einer möglichst vielfältigen Funktionalität und/oder sehr hoher Leistungsfähigkeit bisher der gesamte Antriebsstrang neu konzipiert wurde, was einen erheblichen Änderungs- und Entwicklungsaufwand in Verbindung mit massiven Eingriffen in bestehende Systeme bedeutet.

Der vorliegenden Erfindung liegt davon ausgehend das Problem zugrunde, in einen konventionellen, d.h. einen mit einem Verbrennungsmotor und einem Getriebe ausgerüsteten Fahrzeugantriebsstrang, zusätzlich eine elektrische Maschine zu integrieren und auf diese Weise einen besonders kostengünstigen hybriden Antriebsstrang bereitzustellen.

Die Aufgabe wird durch ein elektromotorisches Antriebsmodul gemäß dem Patentanspruch 1 gelöst. Durch dieses Modul wird eine Baueinheit bereitgestellt, welche die elektrische Maschine und zwei Kupplungen zur Montage in dem Kraftfahrzeugantriebsstrang umfasst. Mit Hilfe der Kupplungen kann der Rotor der elektrischen Maschine wahlweise mit dem Verbrennungsmotor oder mit dem Getriebe oder mit dem Verbrennungsmotor und dem Getriebe zur Übertragung eines Drehmoments gekoppelt werden. Ein solches Modul kann z.B. von einem Zulieferer unter Verwendung von Standardkomponenten automatisiert und somit kostengünstig hergestellt werden. Zur Montage kann dieses in dessen Gesamtheit einfach in die Glocke eines Gangwechselgetriebes eingeführt und dort befestigt werden. Auf diese Weise können bei einem Fahrzeughersteller erhebliche Montagezeiten, und -kosten eingespart und die damit verbundenen Risiken beseitigt werden. Aufgrund der in der Praxis begrenzten Anzahl von Standardgetriebetypen ist ein solches Modul universell in verschiedenen Fahrzeugplattformen einsetzbar.

Vorteilhafte Ausführungen und Weiterbildungen der Erfindung sind den Unteransprüchen sowie der nachfolgenden Figurenbeschreibung und den Figuren entnehmbar.

Im Folgenden wird die Erfindung anhand der beiliegenden Zeichnungen beispielhaft beschrieben. In den Figuren sind soweit möglich gleiche oder gleichwirkende Baugruppen und Elemente mit identischen Bezugszeichen versehen. Es zeigen:
- Fig.1: ein elektromotorisches Antriebsmodul18a in einem Kraftfahrzeugantriebs-strang, welches eine elektrische Maschine und eine erste und eine zweite Kupplung zum Zusammenwirken mit einem Verbrennungsmotor und einem Getriebe beinhaltet; wobei das Eingangs- und das Ausgangselement der ersten Kupplung an einer Gehäusezwischenwand gelagert ist;
- Fig. 2: ein gegenüber Fig. 1 ohne eine Gehäusezwischenwand ausgeführtes Antriebsmodul 18b, wobei sich das Eingangselement der ersten Kupplung über die Kurbelwelle des Verbrennungsmotors abstützt;
- Fig. 3: ein Antriebsmodul 18c gemäß Fig. 1, wobei die erste Kupplung mittels eines sich an einer Gehäusezwischenwand abstützenden Hydraulikzylinder betätigt werden kann;
- Fig. 4: ein Antriebsmodul 18d, wobei die erste Kupplung als "Normally-Open-Typ" ausgeführt ist und mittels eines in die Gehäusezwischenwand integrierten Betätigungszylinders betätigt werden kann und wobei das Kupplungseingangs-element der ersten Kupplung an dem Kupplungseingangselement der zweiten Kupplung gelagert ist;
- Fig. 5: ein Antriebsmodul 18e gemäß Fig. 4, wobei die erste Kupplung als "Normally-Closed-Typ" ausgeführt ist;
- Fig. 6: ein Antriebsmodul 18f mit einer im Drehmomentfluss zwischen der Kurbelwelle eines Verbrennungsmotors und dem Eingangselement der ersten Kupplung angeordneten Driveplate, in welche ein Torsionsdämpfer integriert ist;
- Fig. 7: ein Antriebsmodul 18g mit einer der zweiten Kupplung vorgeschalteten Torsionsschwingungsdämpferanordnung, deren Eingangsteil fest mit dem Rotor der elektrischen Maschine verbunden ist;
- Fig. 8: ein Antriebsmodul 18h gemäß Fig.7, wobei der Innenlamellenträger der ersten Kupplung zusätzlich in der Kurbelwelle gelagert ist;
- Fig. 9: ein Antriebsmodul 18i mit einem an der Gehäusezwischenwand gelagerten Innenlamellenträger.

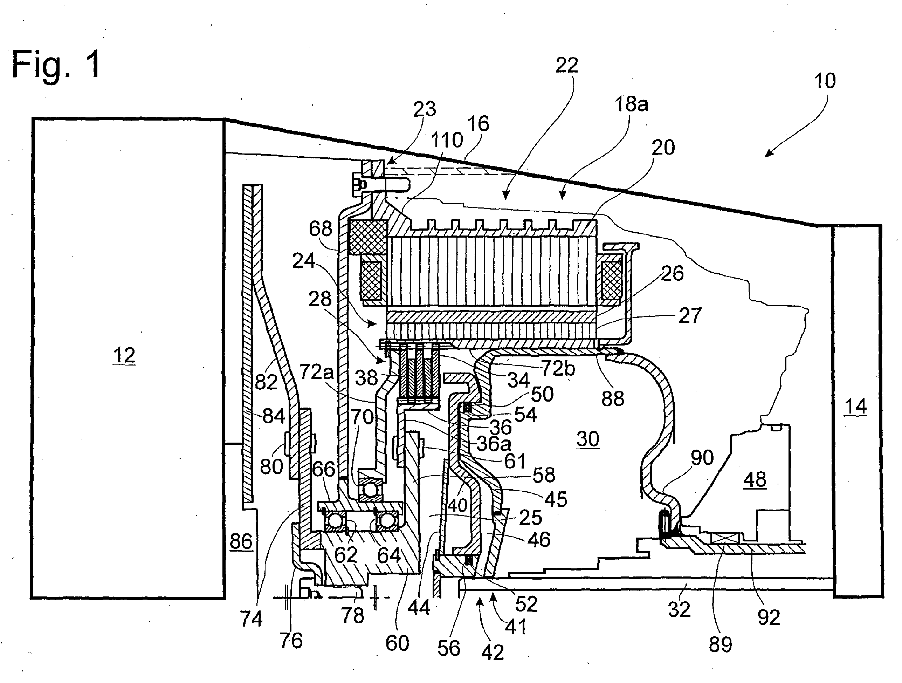

Fig.1 zeigt in einer teilweise schematisierten Axialschnittdarstellung einen Ausschnitt eines zunächst konventionellen Kraftfahrzeugantriebsstrangs 10 aus einer Serienfertigung mit einem Verbrennungsmotor 12 und einem Schaltgetriebe 14, welches hier als Automatikgetriebe ausgebildet ist. Der in der Getriebeglocke 16 vorhandene Bauraum zwischen dem Verbrennungsmotor 12 und dem Getriebe 14 ist üblicherweise einer Reibungskupplung oder bei einem Automatikgetriebe einem als Anfahrelement dienenden hydrodynamischen Drehmomentwandler vorbehalten.

Es ist erkennbar, dass an deren Stelle innerhalb der Getriebeglocke 16 ein elektromotorisches Antriebsmodul 18a in den Antriebsstrang integriert wurde, um das Fahrzeug bei Bedarf rein elektromotorisch, rein verbrennungsmotorisch oder in einer gemischten Betriebsweise antreiben zu können. Dazu ist der Stator 20 einer als Innenläufer ausgebildeten permanenterregten elektrischen Maschine 22 über einen Statorträger 110 mittels einer Verschraubung 23 innerhalb der Getriebeglocke 16 drehfest abgestützt angeordnet. Die Bauart der elektrischen Maschine 22 ist für die weiteren Ausführungen unerheblich, d.h. diese kann bspw. auch als Asynchronmaschine; Reluktanzmaschine oder dgl. vorgesehen sein. Anstelle eines bauraumbedingt bevorzugten Innenläufers kann jedoch durch Modifikationen auch ein Außenläufer eingesetzt werden.

Der innerhalb des Stators 20 drehbar gelagerte Rotor 24 weist einen Rotorträger 72 mit einem radialen Abschnitt 72a und einem axialen Abschnitt 72b und ein lamelliertes Rotorjoch auf, an dessen Außenumfangsfläche eine Mehrzahl von Permanentmagneten 26 angeordnet ist, deren Magnetfeld mit einem von einem Wicklungssystem des Stators 20 erzeugten weiteren Magnetfeld wechselwirken und somit den Rotor 24 antreiben kann und wie im Verlauf der weiteren Beschreibung ersichtlich wird, zum Antrieb des Fahrzeuges oder dem Starten des Verbrennungsmotors 12 dienen kann.

Der Rotor 24 steht mit einer ersten, schaltbaren Kupplung 28 mit der Kurbelwelle 86 des Verbrennungsmotors 12 und mit einer zweiten, von der ersten unabhängigen und ebenfalls schaltbaren Kupplung 30 mit der Eingangswelle 32 des Getriebes 14 in Wirkverbindung. Die Anordnung des Rotors 24 mit den Kupplungen 28, 30 ist äußerst kompakt ausgeführt, indem beide Kupplungen 28, 30 innerhalb eines Aufnahmeraumes 25 im Rotor 24 angeordnet sind und somit von diesen kein weiterer axialer und radialer Bauraum beansprucht wird.

Die erste Kupplung 28 ist als trockene Lamellenkupplung ausgeführt, wobei ein Abschnitt des hohlzylindrisch gestalteten Rotors 24, genauer der axiale Abschnitt 72b des Rotorträgers 72, den Außenlamellenträger bildet und an dessen Innenumfangsfläche eine Verzahnung zur Aufnahme von mehreren Außenlamellen 34 trägt, die dort innerhalb eines gewissen Bereichs axial verlagerbar sind. In die Lamellenzwischenräume greifen von radial innen weitere, auf einem verzahnten Innenlamellenträger 36 axial verlagerbar angeordnete Innenlamellen 38 ein, wobei das gesamte aus den Lamellen 34, 38 gebildete Paket mittels eines druckbeaufschlagbaren hydraulischen Kolbens 40 einer einen Hydraulikzylinder 41 umfassenden Betätigungseinrichtung 42 entgegen der Wirkung eines als Teller- oder Membranfeder 44 ausgebildeten Rückstellelementes 44 belastet werden kann und somit die Drehmomentübertragung zwischen dem Rotor 24 und dem Innenlamellenträger 36 und den nachfolgenden Elementen herstellt. Bevorzugt werden bei dieser trockenen Lamellenkupplung 28 die Innenlamellen 38 als Reiblamellen eingesetzt.

Es ist erkennbar, dass die Kupplung 28 als "Normally-Open-Typ" ausgeführt ist. Der Kolben 40 ist Bestandteil eines um die Getriebeeingangswelle 32 angeordneten konzentrischen Hydraulikzylinders 41, dessen axial feststehendes Gehäuse von einem sich im Wesentlichen radial erstreckenden Gehäusebereich 45 der zweiten Kupplung 30 gebildet wird, wie diese nachstehend erläutert wird. Der variable Druckraum 46 des Hydraulikzylinders 41 wird durch den Kolben 40 und den Gehäusebereich 45 begrenzt und durch die als Hohlwelle ausgeführte Getriebeeingangswelle 32 von einer Pumpenanordnung 48 mit einem Fluid versorgt. Die Abdichtung des Druckraumes 46 erfolgt durch zwei O-Ringdichtungen 50, 52, welche in ringförmige Nuten 54, 56 an dem Gehäusebereich 45 eingelegt sind.

Der Innenlamellenträger 36 ist mit einem an diesem nach radial innen weisenden Abschnitt mit einem Radialflansch 58 einer Kupplungsnabe 60 bspw. mittels einer Nietverbindung 61 fest verbunden und ist mittels zwei als Wälzlager ausgeführte Radiallagern 62, 64 im Inneren eines Rohrabschnittes 66 einer mit dem Gehäuse bzw. der Getriebeglocke 16 und dem Statorträger 110 mittels der Verschraubung 23 verbundenen Gehäusezwischenwand 68 gelagert. An der Außenumfangsfläche des Rohrabschnitts 66 stützt sich über ein dort befindliches weiteres Radiallager 70, das ebenfalls ein Wälzlager darstellt, und einen Rotorträger 72 stirnseitig der Rotor 24 der elektrischen Maschine 22 ab. An der zum Verbrennungsmotor 12 gerichteten Axialseite befindet sich die Kupplungsnabe 60 in Anlage an einer Koppelscheibe 74, welche mittels einer Sicherungsscheibe 76 und einem innerhalb der Kupplungsnabe 60 festgelegten Bolzen 78 axial gegen die Kupplungsnabe 60 gepresst wird und mittels an beiden Elementen 74, 60 ausgeführten und ineinander greifenden Formschlussprofilen, bspw. einer Hirth-Verzahnung, zur Drehmitnahme mit der Kupplungsnabe 60 verbunden ist.

In deren radial äußeren Bereich ist die Koppelscheibe 74 bspw. mittels einer Nietverbindung 80 mit einer im Wesentlichen steifen Übertragungsscheibe 82 (Driveplate) verbunden. Die Driveplate 82 weist vorzugsweise einen zur elektrischen Maschine 22 etwa vergleichbaren Durchmesser auf und ist radial außen mittels einer, insbesondere axial flexiblen Drehmomentübertragungsplatte 84 (Flexplate) drehfest mit der Kurbelwelle 86 des Verbrennungsmotors 12 verbunden. Dadurch sind axiale Kurbelwellenschwingungen, eine ggf. durch den Einbau des elektromotorischen Antriebsmoduls 18a begleitete axiale Toleranz und während des Betriebs auftretende Längenänderungen einfach kompensierbar. Somit kann eine gegenseitige unerwünschte Verspannung von im Drehmomentübertragungsweg zwischen dem Verbrennungsmotor 12 und dem Getriebe 14 befindlichen Übertragungselementen vermieden werden.

Die zweite, der Drehmomentübertragung zwischen dem Rotor 24 und der Eingangswelle 32 des Getriebes 14 dienenden Kupplung 30 ist als nasslaufende Kupplung ausgebildet, wobei deren Gehäuse 88, welches gleichzeitig als Kupplungseingangselement fungiert, drehfest mit dem Rotor 24 der elektrischen Maschine 22 verbunden ist, was durch eine nichtlösbare Verbindung, z.B. eine Schweißverbindung oder auch durch eine lösbare Verbindung, z.B. eine Schraub- oder Bajonettverbindung erfolgen kann. Das Gehäuse 88 wird in einer dem Fachmann bekannten Art auf der Getriebeeingangswelle 32 gelagert. Die nasslaufende Kupplung 30 ist in der Figur lediglich im Umriss dargestellt und ist bezüglich deren detaillierten Aufbau vorzugsweise, jedoch nicht ausschließlich in der in der Druckschrift DE 103 15 169 A1 beschriebenen Weise ausgebildet.

Die Kupplung 30 umfasst neben dem mit Fluid gefüllten oder füllbaren Gehäuse 88, wenigstens ein mit diesem um die Eingangswelle 32 des Getriebes 14 gemeinsam drehbares erstes Reiborgan, wenigstens ein mit einem Abtriebsorgan um die Eingangswelle 32 gemeinsam drehbares zweites Reiborgan, das zur Herstellung einer Reibwechselwirkung in Anlage an wenigstens einem ersten Reiborgan bringbar ist und wobei wenigstens ein erstes Reiborgan oder das wenigstens eine zweite Reiborgan einen Reibbelagträger aufweist, der an jeder axialen Seite, an der dieses Reiborgan reibend wirksam ist, eine Reibbelaganordnung trägt, dass wenigstens bei einem einen Reibbelagträger mit Reibbelaganordnung aufweisenden Reiborgan eine Fluidförderflächenanordnung zur Erzeugung einer die Reiborgane wenigstens bereichsweise umströmenden Fluidzirkulation vorgesehen ist. Als Abtriebsorgan bzw. Ausgangselement dient eine Abtriebsnabe, welche in bekannter Weise mittels einer Verzahnung mit der Eingangswelle 32 des Getriebes 14 verbunden ist.

Das Gehäuse 88 ist mehrteilig ausgeführt und mit einem, dem Getriebe 14 zugewandten Gehäuseteil 90, radial innen mit einer Pumpennabe 92 fest verbunden, welche sich über die Getriebeglocke bzw. das Getriebegehäuse 16 mittels eines Lagers 89 abgestütztt. Die Pumpennabe 92 ist Bestandteil einer an dem Getriebe 14 angeordnete Pumpe 48, mittels der ein Fluiddruck aufgebaut werden kann und im Ergebnis ein gleichmäßiger Ölaustausch zwischen der Kupplung 30 und dem Getriebe 14 ermöglicht wird. Durch die besondere Gestaltung der kupplungsinternen Bauteile kann eine erzwungene und bei Bedarf extrem rasche Zirkulation von Fluid innerhalb der Kupplung 30 bewirkt werden.

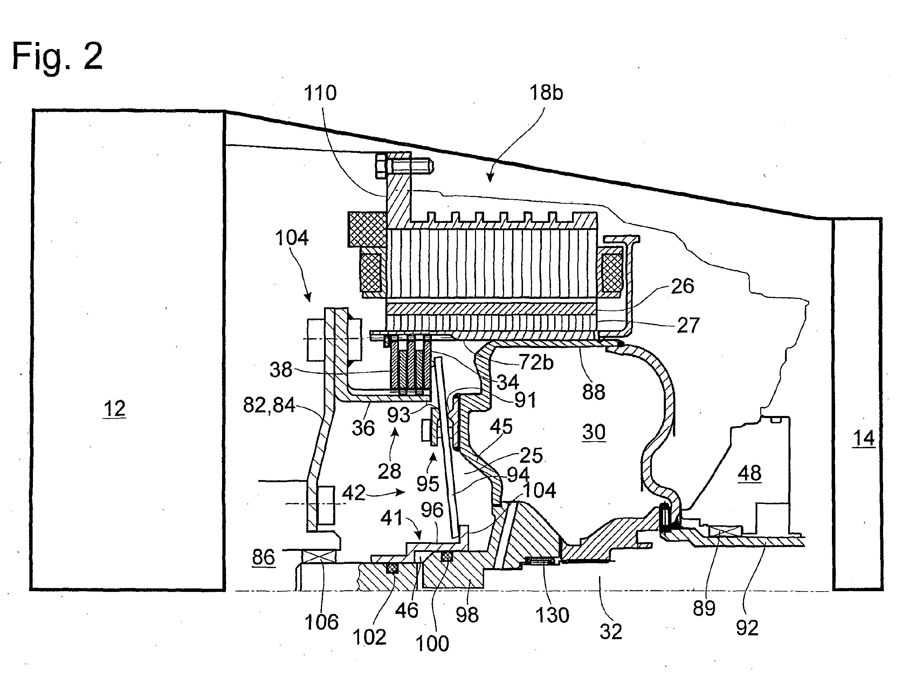

Fig. 2 zeigt ein dem vorstehend erläuterten grundlegend vergleichbares Antriebsmodul 18b, wobei jedoch keine Gehäusezwischenwand ausgeführt ist, die Kupplung 28 als "Normally-Closed-Typ" ausgestaltet ist und durch die Wirkung eines an den Kupplungslamellen 34 angreifenden und als membranfederähnlich ausgebildeten Betätigungsorgans 94 im unbetätigten Zustand geschlossen gehalten wird, während bei einer Betätigung mittels des Hydraulikzylinders 41 entgegen der Kraft des Betätigungsorgans 94 die Kupplung 28 geöffnet werden kann. Das Betätigungsorgan 94 stützt sich axial zwischen zwei Schneiden 91, 93 einer am Gehäuse 88 der Kupplung 30 angeordneten Halterung 95 ab. Eine derartige Bauart macht für das rein elektrische Anfahren eine zusätzliche Hydraulikpumpe im Antriebssystem erforderlich, die unabhängig vom Betriebszustand des Verbrennungsmotors arbeitet, um vor dem Anfahren zunächst die als Schwungstartkupplung arbeitende Kupplung 28 hydraulisch gesteuert öffnen zu können.

Der zur Betätigung der Kupplung 28 vorgesehene Hydraulikzylinder 41 weist einen radial innenliegenden, sich im Wesentlichen axial ersteckenden Stufenkolben 96 auf, der auf einer Gehäusenabe 98 der zweiten Kupplung 30 geführt ist und der gemeinsam mit dieser den Druckraum 46 bildet, welcher wiederum durch zwei an der Gehäusenabe angeordneten Ringdichtungen 100, 102 abgedichtet wird. Der Stufenkolben 96 ist endseitig mit einem Radialflansch 104 ausgebildet, an welchem das Betätigungsorgan 94 zur Kraftübertragung auf das Lamellenpaket 34, 38 angreifen kann. Der besondere Vorteil des mittels eines Stufenkolbens 96 erzielbaren kleinen äußeren Zylinderdurchmessers besteht in der geringen zu kompensierenden Fliehkraft aus dem rotierenden Fluid. Die Fliehkraftkompensation kann hierbei ohne besonderen Aufwand bereits mittels der Rückstellkraft des Betätigungsorgans 94 erfolgen.

In beiden Ausführungsbeispielen gemäß der Fig. 1 und 2 erfolgt die Fluidzuleitung zu dem Betätigungszylinder 41 über einen an diesem radial innen vorgesehenen Anschluss, der eine Strömungsverbindung zu einem Fluidkanal in der Getriebeeingangswelle 32 herstellt. Die Ansteuerung der Kupplungen 28, 30 wird von einem zeichnerisch nicht dargestellten Getriebesteuergerät übernommen. Alternativ dazu kann eine Fluideinleitung ebenso von außen mittels einer Drehzuführung in das Gehäuseinnere der nassiaufenden Kupplung 30, dann eine Weiterleitung durch bzw. um die nasslaufende Kupplung 30 herum zum Hydraulikzylinder 41 erfolgen.

Es sei erwähnt, dass alternativ zu der in der Fig 1 dargestellten zweifachen bzw. zweiseitigen Lagerung des Rotors 24 über den Rotorträger 72 und das Gehäuse 88, dieser auch nur einseitig über das Gehäuse 88 der zweiten Kupplung 30 gelagert werden kann, indem der Lamellenträger 36, wie dieses ebenfalls in Fig. 2 dargestellt ist, direkt mit der Driveplate 82 bzw. der Flexplate 84 beispielsweise durch eine Verschraubung 104 verbunden werden kann. In diesem Fall können die Zwischenwand 68 und der Rotorträger 72 entfallen. Selbstverständlich besteht ferner die Möglichkeit, den Innenlamellenträger 36 auch unmittelbar mit der Kurbelwelle 86 zu verbinden.

Bei dem in der Figur 1 erläuterten Ausführungsbeispiel ragt die Getriebeeingangswelle 32 nicht über die nasslaufende Kupplung 30 hinaus. Es besteht gemäß Fig. 2 alternativ im Zusammenhang mit der einseitigen Lagerung des Rotors 24 auch die Möglichkeit, die Kupplung 30 mittels deren Kupplungsnabe 98 in der Kurbelwelle 86 mittels eines Pilotlagers 106 abzustützen oder als noch weitere Variante die Getriebeeingangswelle 32 in bekannter Weise in einem Pilotlager an der Kurbelwelle 86 des Verbrennungsmotors 12 zu lagern

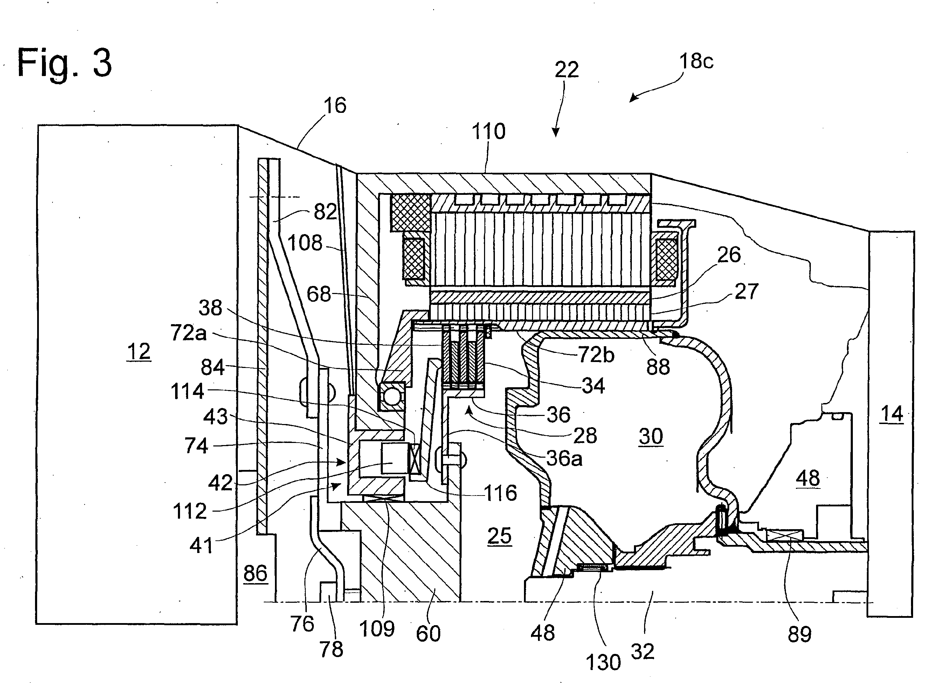

In Fig. 3 ist anhand eines Antriebsmoduls 18c eine noch weitere alternative Aktuierung der Kupplung 28 dargestellt, welche in diesem Fall von der Seite des Verbrennngsmotors 12 aus erfolgt. Hierzu ist eine Druckleitung 108 von der Wandung der Getriebeglocke 16, d.h. von radial außen zu einem mittels eines Radiallagers 109 konzentrisch um die Kupplungsnabe 60 angeordneten Betätigungszylinder 41 zugeführt, der sich über dessen Gehäuse 43 axial an der Zwischenwand 68 abstützt, welche in Fig. 3 Bestandteil eines Statorträgers 110 der elektrischen Maschine ist, welches gleichzeitig auch als Gehäuse dient. Der Statorträger 110 umschließt somit nicht nur die elektrische Maschine 22, sondern auch die Kupplungen 28 und 30, wodurch das Antriebsmodul 18c noch kompakter und für einen Einbau an einem Fahrzeug äußerst handhabbar gestaltet werden kann.

Der Kolben 112 des Betätigungszylinders 41 greift bei der dargestellten "Normally-Open-Kupplung" mittels eines Einrücklagers 114 und einer Federhebelplatte 116 an dem Lamellenpaket 34, 38 an. Vorteilhafter Weise sind bei dieser Ausführung keinerlei Änderungen an der Eingangsseite des Automatikgetriebes 14 erforderlich. Vorkehrungen sind lediglich bezüglich der Ansteuerung der gegenüber einem Wandlerautomaten zusätzlichen Kupplung 28 vorzusehen, was z.B. als in die Hydraulik des Getriebes 14 integrierte oder als externe zusätzliche Druckmittelversorgung erfolgen kann.

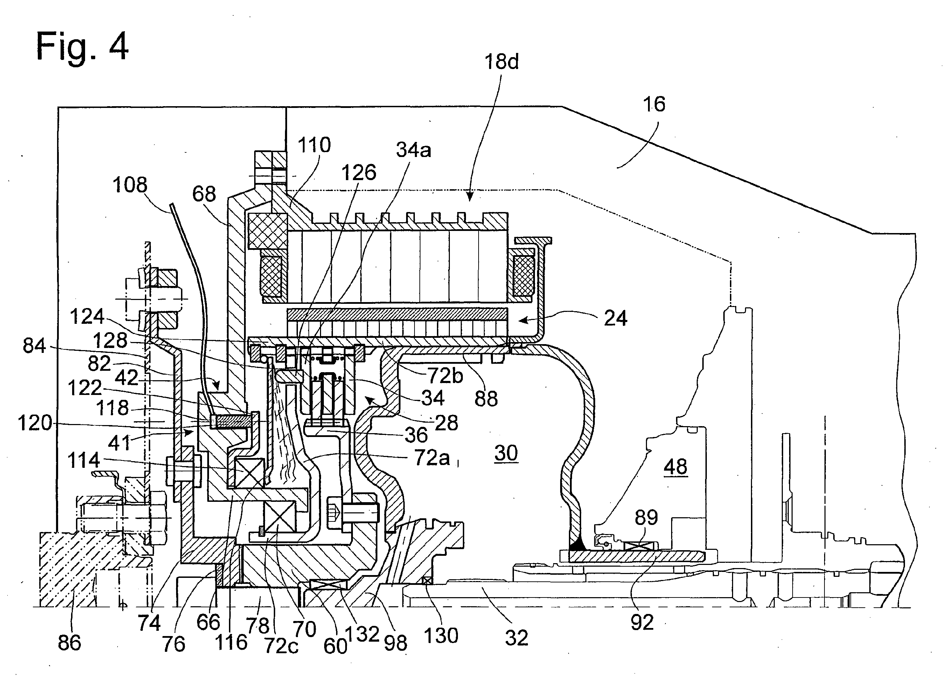

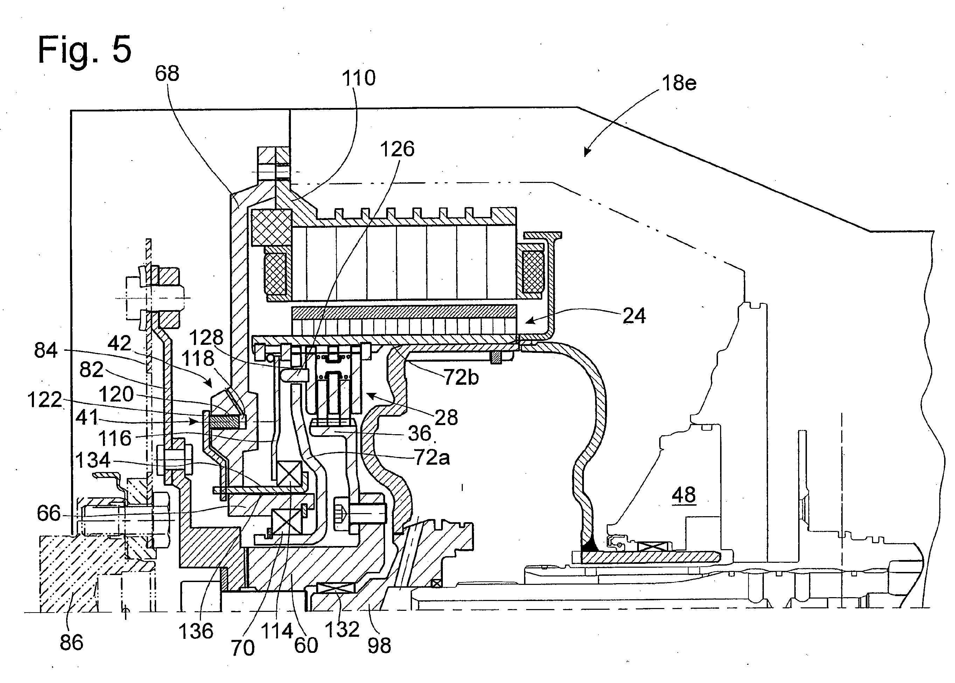

Den mit den Fig. 1 und 3 erläuterten Ausführungsbeispielen ist gemeinsam, dass sowohl das Eingangs- als auch das Ausgangsteil der ersten Kupplung 28, d.h. der Innenlamellenträger 36 und der als Außenlamellenträger fungierende Rotor 24, an bzw. mittels der Gehäusezwischenwand 68 gelagert und dort abgestützt ist. Nachfolgend wird anhand der Fig. 4, 5 eine dazu alternative Lagerung des Innenlamellenträgers 36 der ersten Kupplung 28 und weitere Ausgestaltungsvarianten der Betätigungseinrichtung 42 für die Kupplung 28 dargestellt.

Das in der Fig. 4 gezeigte elektromotorische Antriebsmodul 18d basiert zunächst in dessen grundlegendem Aufbau auf denjenigen der Fig. 1 und 3. Wie bereits vorstehend erläutert, sind das Gehäuse 88 der zweiten Kupplung 30, der Rotor 24 mit dessen Rotorträger 72 und die äußeren Kupplungslamellen 34 der ersten Kupplung 28 drehfest miteinander verbunden. Diese Elemente werden einerseits über das zwischen der Pumpennabe 92 und der Pumpenanordnung befindliche Lager 89 und andererseits über ein an der Innenumfangsfläche des Rohrabschnitts 66 angeordnetes Festlager 70 über die Gehäusezwischenwand 68 auf dem Getriebegehäuse 16 gelagert, wobei der radiale Abschnitt 72a des Rotorträgers 72 mit einem Rohransatz 72c in den Rohrabschnitt 66 der Zwischenwand 68 eintaucht und dort mit dem Innenring des Lagers 70 verbunden ist. Das Lager 70 hat zusätzlich die Aufgabe, die Einrückkräfte der bevorzugt als Schwungstartkupplung dienenden ersten Kupplung 28 und gegebenfalls auftretende Axialkräfte der mit dem Rotor 24 verbundenen Baugruppen aufzunehmen.

Die erste Kupplung 28 ist als "Normally-Open-Kupplung" zur gedrückten Betätigung ausgeführt, wozu ein in die Zwischenwand 68 integrierter konzentrischer hydraulischen Nehmerzylinder 41 vorgesehen ist. Zur Bildung des Zylindergehäuses und des Druckraumes ist in der Zwischenwand 68 eine zu der Kupplung 28 gerichtete ringförmige Ausnehmung 118 eingebracht, in welche ein Ringkolben 120 eintaucht. Der Ringkolben 120 liegt an dessen dem Druckraum abgewandten Ende an einem gekröpften Einrückteller 122 an, welcher eine Einrückkraft zum Schließen der Kupplung 28 auf einen feststehenden Lagerring eines axial verlagerbaren Einrücklagers 114 und von dessen dem der Kupplung 28 zugewandten drehbaren Lagerring weiter auf den radial inneren Rand einer Federhebelplatte 116 übertragen kann. Die Federhebelplatte 116 ist mit deren Außenbereich an einem axial über den elektrisch aktiven Teil des Rotors 24 überstehenden Trägerabschnitt 124 verschwenkbar gelagert und greift an mehreren Übertragungselementen 126 an, welche gleichmäßig auf einem Teilkreis verteilt an der der Hebelplatte 116 benachbarten Außenlamelle 34a ausgebildet sind und durch segmentweise ausgeführte Durchgriffsöffnungen 128 im Rotorträger 72a hindurchragen.

Alternativ zu der dargestellten integrierten Ausbildung kann der Betätigungszylinder 41 auch als externes Element an der Gehäusezwischenwand 68 angeordnet werden. Die Ansteuerung des Betätigungszylinders 41 erfolgt unabhängig von dessen Ausbildung über eine bereits in Verbindung mit Fig. 3 erläuterte Druckleitung 108.

Durch die unmittelbar radial benachbarte Anordnung der beiden Lager 70 und 114 radial innen bzw. radial außen an der Zwischenwand 68 wird ein bei einer Wechselwirkung auftretender Kraftfluss zwischen diesen Lagern 70, 114 weitestgehend minimiert.
Die Getriebeeingangswelle 32 ragt in die zweite Kupplung 30 hinein und stützt sich dort an einem vorzugsweise an der Gehäusenabe 98 festgelegtem Lager 130 ab.

Der Innenlamellenträger 36 ist, wie bereits vorstehend zur Fig. 1 erläutert, mittels der Elemente 60, 74, 82 und 84 mit der Kurbelwelle 86 drehfest verbunden. Im Unterschied zu den Fig. 1 und 3 ist der Innenlamellenträger 36 hierbei jedoch nicht an der Zwischenwand 68 gelagert, sondern kann sich mittels eines auf der Gehäusenabe 98 angeordneten Lagers 132 radial abstützen. Auf diese Weise werden von der Kurbelwelle 86 eingebrachte Taumelbewegungen bereits von der Driveplate 82 und/oder der Flexplate 84 absorbiert, wodurch insbesondere die Belastung des Innenlamellenträgers 36 erniedrigt und die Lebensdauer der ersten Kupplung 28 erhöht werden kann. Zusätzlich erleichtert das Lager 132 die Montage des Antriebsmoduls 18d.

Das Antriebsmodul 18e der Fig. 5 unterscheidet sich von demjenigen der Fig.4 nur hinsichtlich der Ausgestaltung der Kupplung 28 und deren Betätigungseinrichtung 42. Die Kupplung 28 ist in diesem Fall als gezogene "Normally-Closed-Kupplung" konzipiert, d.h. diese wird durch eine Druckbeaufschlagung des Betätigungszylinders 41 geöffnet und somit die Drehmomentübetragung zwischen der Kurbelwelle 86 und dem Rotor 24 unterbrochen. Die Ausnehmung 118 ist an der zur Kurbelwelle 86 gerichteten Seite der Zwischenwand 68 ausgeführt, wobei der mit dem Kolben 120 zusammenwirkende Einrückteller 122 über ein zusätzliches axial geführtes Übertragungselement 134 an der der Kupplung 28 zugewandten Seite des Ausrücklagers 114 angreift. Das Übertragungselement 134 ist beispielsweise als Betätigungshülse mit endseitig eingebrachten Axialschlitzen ausgeführt, wobei die zwischen diesen verbleibenden Stege durch mehrere Durchgriffsöffnungen 136 der Zwischenwand 68 hindurchgeführt sind. Es ist ersichtlich, dass das Ausrücklager 114 auf der Außenumfangsfläche des Übertragungselements 134 angeordnet ist und axial zwischen der Federhebelplatte 116 und einem nach radial außen gerichteten Ringkragen 138 des Übertragungselements 134 eingeklemmt ist. Die dargestellte gezogene Ausführung der Kupplung 28 ermöglicht die Wahl eines günstigeren Übersetzungsverhältnisses und damit auch eine Reduzierung der Ausrückkräfte, welche ebenso durch das Festlager 70 abgestützt werden müssen.

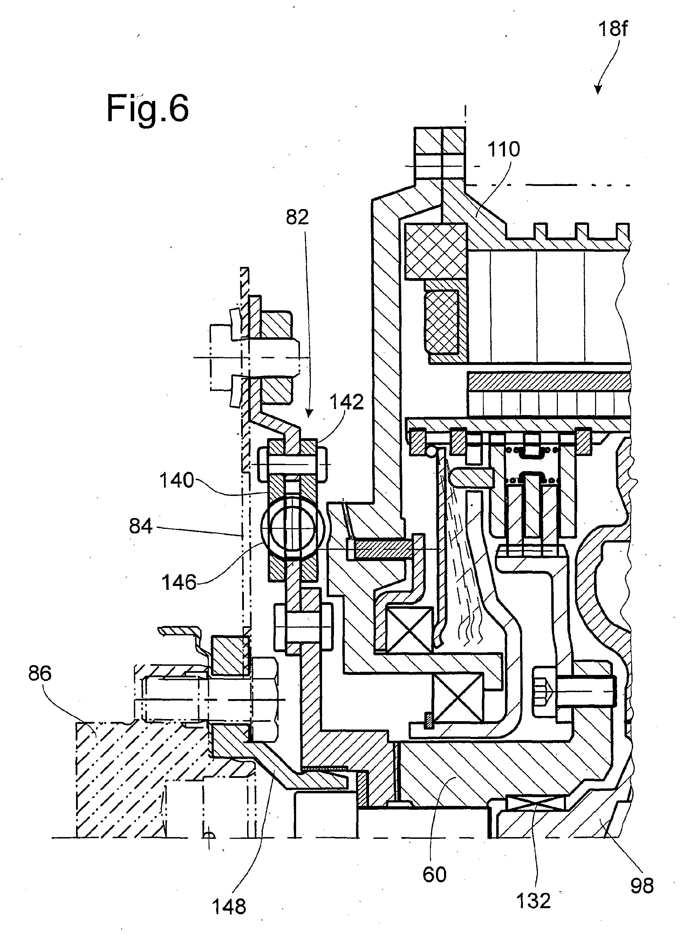

Optional kann bei den Ausführungsbeispielen der Fig. 1-5 zur Erhöhung des Fahrkomforts zwischen der Driveplate 82 und dem Innenlamellenträger 36 eine Torsionsschwingungsdämpfungsanordnung zur Dämpfung von unerwünschten Torsionsschwingungen integriert werden. Diese Dämpfungsanordnung kann wesentlich zur Geräusch- und Verschleißminimierung am Eingangsprofil 34 der ersten Kupplung 28 beitragen. Ebenso kann die zweite Kupplung 30 eine dieser zugeordnete Torsionsschwingungsdämpfungsanordnung aufweisen, wie dieses noch anhand der Fig. 6-9 erläutert wird.

Es gemäß dem in Fig. 6 dargestellten Antriebsmodul 18f auch vorteilhaft, ein Ausgleichselement 140 in die Driveplate 82 zu integrieren. Dazu wird bspw. die Driveplate 82 in ein Eingangsteil 142 und ein Ausgangsteil 144 aufgeteilt, wobei zwischen diesen mehrere im Wesentlichen in Umfangsrichtung komprimierbare Federspeicher 146 eingelagert sind. Dadurch ist das Eingangsteil 142 gegenüber dem Ausgangsteil 144 in der Axialebene in einem gewissen Bereich verschwenkbar und radial verlagerbar angeordnet. Im Unterschied zu einem vorrangig zur Schwingungstilgung ausgeführten Torsionsdämpfer sind das Eingangs- 142 und das Ausgangsteil 144 in der Lateralebene nur in einem sehr geringen Winkelbereich von maximal etwa 3° gegeneinander verdrehbar.

Das Ausgleichselement 140 hat hierbei insbesondere die Aufgabe, eine radiale Weichheit zwischen der Kurbelwelle 86 und dem zwischen der Gehäusenabe 98 und der Kupplungsnabe 60 angeordneten Lager 132 darzustellen, wohingegen die Reduzierung von Drehschwingungen aufgrund der geringen Vedrehbarkeit der Teile 142, 144 von vernachlässigbarer Bedeutung ist.

Die gewünschte radiale Weichheit dient dazu, Achsversätze zwischen der Kurbelwelle 86 und der Getriebeeingangswelle 32 sowie Taumelbewegungen der Kurbelwelle 86 auszugleichen und diese nicht alleine durch die Flexplate 84 aufzufangen und damit die radiale Belastung der Lager 70, 132 und 89 zu reduzieren. Zusätzlich kommt ist ein an der Kurbelwelle 86 befestigter Montagezapfen 148 vorgesehen, der bei Montage des Gesamtmoduls an den Verbrennungsmotor eine Vorzentrierung sicherstellt und keine Lagerungsfunktion übernimmt.

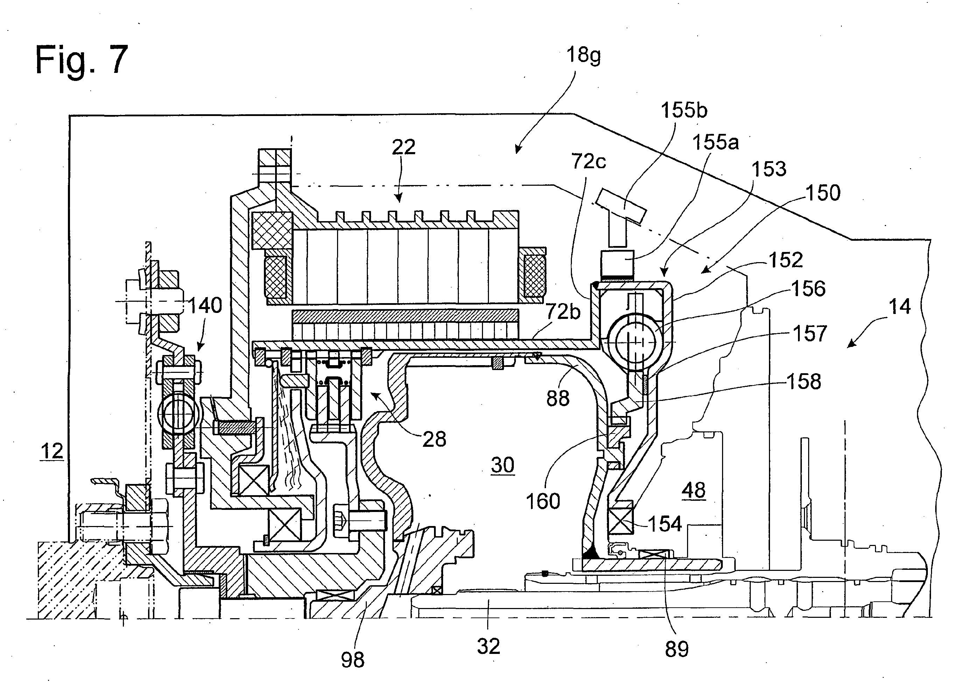

Die Fig. 7-10 zeigen Antriebsmodule 18g-i, bei welchen der Rotor 24 der elektrischen Maschine 22 über dessen Rotorträger 72, 72b drehfest mit dem Eingangsteil einer bevorzugt als Zweimassenschwungrad ausgeführten Torsionsschwingungsdämpfungsanordnung 150 verbunden ist. Das Antriebsmodul 18g der Fig. 7 ist insbesondere angelehnt an die in den Fig. 4 und 6 gezeigten Ausführungsbeispiele. Der axiale Abschnitt 72b des Rotorträgers 72 ist dazu getriebeseitig über das Rotorjoch 27 hinaus verlängert und mit einem Scheibenabschnitt 72c versehen, der gemeinsam mit einer Schale 152 das Gehäuse 153 und zugleich das Eingangsteil des Zweimassenschwungrades 150 bildet, welches sich mittels eines Lagers 154 über die Pumpenanordnung 48 am Getriebe 14 abstützt. Die Verbindung des Scheibenabschnitts 72c mit der Schale 152 kann nichttrennbar z.B. als Schweißverbindung oder trennbar z.B. als Bajonettverbindung ausgeführt sein. Das Gehäuse 153 beherbergt mehrere in Umfangsrichtung angeordnete Federspeicher 156, die sich mit einem Ende am Gehäuse 153 und mit dem jeweils anderen Ende an einem Ausgangsteil 158 abstützen, das vorzugsweise formschlüssig, insbesondere über eine Verzahnung mit dem Eingangsteil der zweiten Kupplung 30, d.h. mit dessen Gehäuse 88 verbunden ist. Letzteres trägt dazu ein formschlüssig in das Ausgangsteil 158 eingreifendes Element, bspw. ein Zahnrad 160. Die Verbindung zwischen der Torsionsschwingungsdämpfungsanordnung 150 und der Kupplung 30 ist somit trennbar, was bei der Montage bzw. Demontage des Antriebsmoduls 18g erhebliche Vorteile mit sich bringt. In Wirkverbindung zwischen der Schale 152, genauer dem Eingangsteil 152, und dem Ausgangsteil 158 ist eine Reibvorrichtung 157 zur effektiven Schwingungsdämpfung ausgebildet. An der Außenumfangsfläche der Schale 152 ist eine Geberstruktur 155 bspw, in Form eines Zahn/Lücke-Profils oder einer ein- oder mehrspurigen kontinuierlich verlaufenden Kontur zur Abtastung durch eine Sensoreinheit zur berührungsfreien Gewinnung einer Rotorlageinformation zur Steuerung der elektrischen Maschine 22 vorgesehen ist.

Es ist ferner ersichtlich, dass die Torsionsschwingungsdämpfungsanordnung 150 bei verbrennungsmotorischen Antrieb des Fahrzeuges im Drehmomentübertragungsweg der ersten Kupplung 28 nachgelagert ist. Diese Anordnung ermöglicht einerseits aufgrund der geringen Massenträgheiten einen äußerst schnellen Startvorgang des Verbrennungsmotors 12 mittels der elektrischen Maschine 22 und andererseits eine optimierte Massenaufteilung des Eingangs- und des Ausgangsteils der Torsionsschwingungsdämpfungsanordnung 150 zur Dämpfung von Torsionsschwingungen bei verbrennungsmotorischen Antrieb. Auf diese Weise wird somit die bisherige bekanntermaßen schwierige und kompromissbehaftete Auslegung einer Torsionsschwingungsdämpfungsanordnung 150 bei deren Anordnung zwischen der Startkupplung 28 und dem Verbrennungsmotor 12 elegant umgangen.

Es ist weiterhin ersichtlich, dass die Federspeicher 156 der Torsionsschwingungsdämpfungsanordnung 150 radial etwa im Bereich des Rotors 24 und dem radial äußeren Abschnitt des Gehäuses 88 und axial nahe an der zweiten Kupplung 30 angeordnet sind, was eine kompakte Bauweise des Antriebsmoduls 18g ermöglicht.

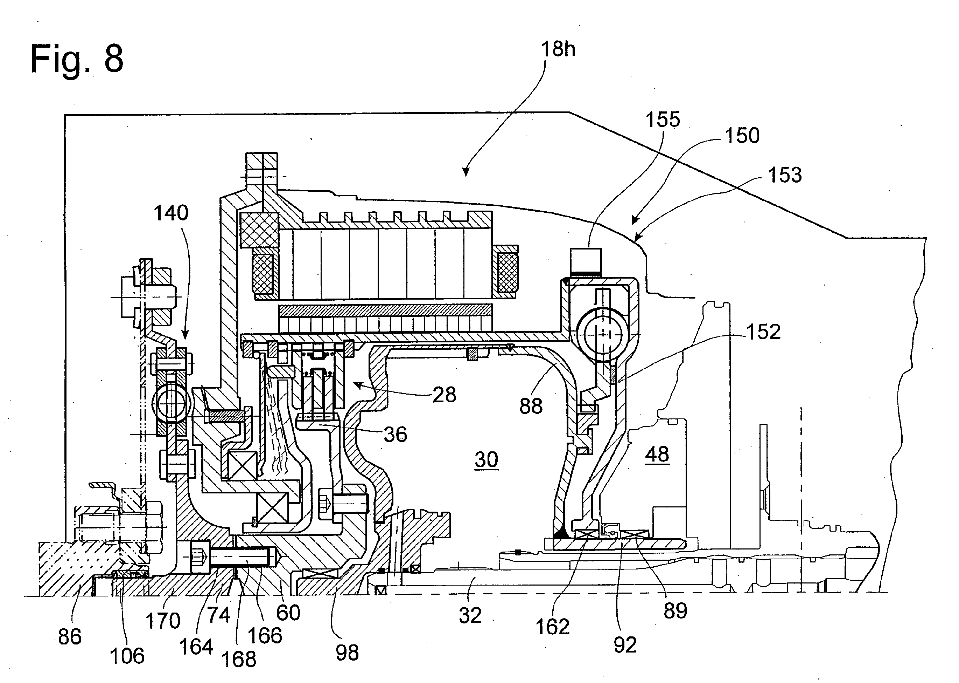

Fig. 8 zeigt ein noch weiteres Antriebsmodul 18h, welches sich in nachfolgenden Details von demjenigen der Fig. 7 unterscheidet. Hierbei ist das, das Eingangsteil der Torsionsschwingungsdämpfungsanordnung 150 bildende Gehäuse 153 mittels eines Lagers 162 auf der Pumpennabe 92 der zweiten Kupplung 30 gelagert. Dabei ist vorteilhaft, dass das Lager 162 im Unterschied zu der in Fig. 7 dargestellten Variante keine umlaufende Bewegung ausführen muß, sondern lediglich mit relativ kleinen, durch den Verschwenkbereich der Torsionsschwingungsdämpfungsanordnung 150 bestimmte Verschwenkungen beaufschlagt wird. In vorteilhafterweise kann das Lager 162 deshalb als kostengünstiges Gleitlager ausgeführt werden.

Desweiteren wird in Fig. 8 eine noch weitere Variante zur Drehmomentmitnahme und Lagerung der mit dem Innenlamellenträger 36 drehfest verbundenen Kupplungsnabe 60 vorgeschlagen. Diese ist mittels einer bereits erläuterten Hirthverzahnung mit der Koppelscheibe 74 verbunden, wobei die Koppelscheibe 74 mehrere auf einem Teilkreis angeordnete Durchgangsbohrungen 164 und die Kupplungsnabe 60 dazu korrespondierend angeordnete Gewindebohrungen 166 zur Aufnahme von Schraubbolzen 168 aufweist. Die Koppelscheibe 74 weist einen zentralen Axialzapfen 170 auf, welcher in dem Pilotlager 106 der Kurbelwelle 86 angeordnet und dort gelagert ist, wodurch die Lagerung der Teile 60, 74 und somit auch der innerhalb der zweiten Kupplung 30 gelagerten Getriebeeingangswelle 32 noch weiter verbessert wird.

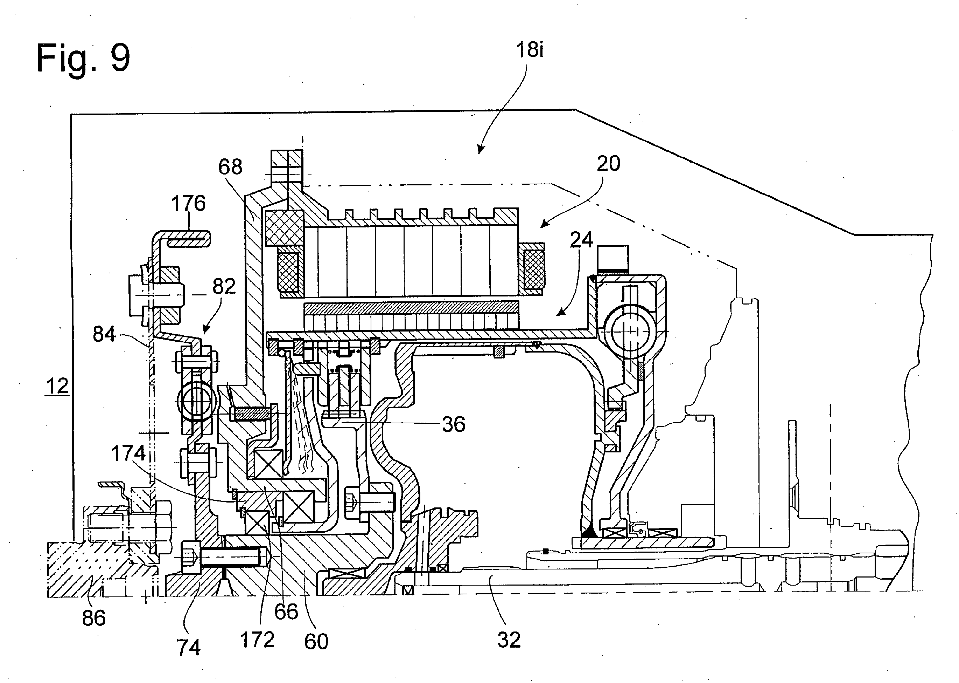

Eine noch weitere alternative Variante der Lagerung des Innenlamellenträgers 36 zeigt Fig. 9, wobei gegenüber der Fig. 8 kein Axialzapfen 170 an der Koppelscheibe 74 ausgeführt ist und die Kupplungsnabe 60 mit einem Wälzlager 172 an der Gehäusezwischenwand 68 gelagert ist. Dazu ist in dem Rohrabschnitt 66 eine Lagerbuchse 174 axial gesichert festgelegt, welche wiederum radial innen das Lager 172 axial fixiert aufnimmt. Auf diese Weise kann sich ebenfalls die Getriebeeingangswelle 32 an der Gehäusezwischenwand 68 abstützen. Zugleich wird für den Innenlamellenträger 36 eine bessere Entkopplung von Taumelbewegungen der Kurbelwelle 86 erzielt.

Alternativ zu der in den Fig. 6-9 dargestellten Anordnung der Torsionsschwingungsdämpfungsanordnung 150 kann diese auch in die zweite Kupplung 30 integriert sein und mit dieser in einem gemeinsamen Gehäuse angeordnet sein. Eine Torsionsschwingungsdämpfungsanordnung kann dort als Element des Eingangsteils oder des Ausgangsteils ausgebildet sein.

Es kann bei allen bisher dargestellten Ausführungsbeispielen auch vorteilhaft sein, die Flexplate 84 und/oder die Driveplate 82 wie dieses in Fig. 9 dargestellt ist, mit einer zusätzlichen Masseanhäufung 176 auszubilden. Diese befindet sich bevorzugt radial außen in einem Bereich zwischen Rotor 24 und dem Stator 20. Zur Ausbildung der Masseanhäufung 176 wurde die Driveplate 82 in deren radial äußeren Bereich axial abgewinkelt und gefaltet. Es ist damit möglich, die Massenträgheit der bei einem Startvorgang des Verbrennungsmotors mit dessen Kurbelwelle zu beschleunigenden Elemente gezielt einzustellen und somit den zeitlichen Ablauf eines Startvorgangs in einer gewünschten Weise zu beeinflussen. Eine Erhöhung der Massenträgheit im Drehmomentübertragungsweg zwischen der Kurbelwelle 86 und dem Innenlamellenträger 36 kann die auf die erste Kupplung 28 seitens des Verbrennungsmotors 12 einwirkenden Drehmomentspitzen erniedrigen und somit zu deren Lebensdauererhöhung beitragen.

Das elektromotorische Antriebsmodul 18a-i wird als Baueinheit vorgefertigt, wobei diese zumindest die elektrische Maschine 22 und die beiden Kupplungen 28, 30 umfasst, welche mit dem Rotor 24 der elektrischen Maschine 22 eine Untereinheit bilden. Je nach Ausführung gehört die Zwischenwand 68 ebenfalls zum Umfang des Antriebsmoduls 18. Dieses Antriebsmodul 18a-i steht somit zur Bildung einer weiteren Montageeinheit bei einem Getriebehersteller oder zum unmittelbaren Einbau zwischen Verbrennungsmotor und Getriebe bei einem Fahrzeughersteller zur Verfügung, wobei das Modul 18a-f in die Getriebeglocke 16 eingeführt und von der Getriebeeingangswelle aufgenommen werden kann. Alternativ kann die Zwischenwand 68 als eigenständiges Gehäuse zwischen der Front des Verbrennungsmotors 12 und dem Getriebe 14 montierbar ausgeführt sein. Zur Endmontage wird dann der Stator 20 der elektrischen Maschine und ggf. zusätzlich die Zwischenwand 68 an dem Getriebegehäuse 16 festgelegt und zur Herstellung einer Drehmitnahmeverbindung die Kurbelwelle 86 des Verbrennungsmotors 12 mit der Flex-/oder optional mit der Driveplate oder direkt mit dem Innenlamellenträger 36 verbunden.

Durch die Implementierung des beschriebenen elektromotorischen Antriebsmoduls wird ein vielseitiger Hybridantrieb dargestellt, welcher bei Abkopplung des Verbrennungsmotors durch Öffnen der ersten Kupplung einen alleinigen elektromotorischen Fahrbetrieb ermöglicht. Die elektrische Maschine kann im Motorbetrieb die Pumpenanordnung des Automatikgetriebes direkt antreiben und ermöglicht somit auch während des rein elektrischen Fahrbetriebes sämtliche hydraulischen Getriebefunktionen.

Die elektrische Maschine kann im Verein mit der ersten Kupplung einen Schwungstart zum Starten des Verbrennungsmotors ausführen. Der Antriebsstrang 10 und insbesondere das elektromotorische Antriebsmodul 18a-i sind gemäß der in den Figuren 1-6 dargestellten Ausführungsbeispiele so konzipiert, dass zwischen dem Eingangselement der ersten Kupplung 28, also dem Innenlamellenträger 36, und der Kurbelwelle 86 ein möglichst geringes Trägheitsmoment auftritt, um einen möglichst schnellen Motorstart zu ermöglichen.

Das Schließen dieser Kupplung bei rotierendem Rotor, d.h. das Hinzuschalten des stehenden Verbrennungsmotors erfolgt in der Weise, dass das Antriebsmoment der E-Maschine in dem Maße erhöht wird, wie der Startvorgang des Verbrennungsmotors es erfordert. Das Antriebsmoment auf die Räder bleibt hierbei unbeeinflusst, somit bleibt den Fahrzeuginsassen dieser Vorgang weitestgehend verborgen.

Es ist jedoch auch möglich, den stehenden Verbrennungsmotor mittels der geschlossenen Kupplung 28 drehfest an den Rotor der elektrischen Maschine zu koppeln und beide Aggregate im Verein aus dem Stand hochzudrehen, was als Direktstart bekannt ist.

Der Fahrbetrieb mit Verbrennungsmotor erfolgt mit geschlossener erster sowie geschlossener zweiter Kupplung. Die elektrische Maschine läuft hierbei im Generatorbetrieb mit. Während des Fahrbetriebes kann der Generatorbetrieb im Bedarfsfall jedoch für eine bestimmte Zeit unterbrochen werden, damit die elektrische Maschine im Motorbetrieb den Verbrennungsmotor unterstützen kann und somit ein zusätzliches Drehmoment in den Fahrzeugantriebsstrang einleiten kann.

Bei Fahrzeugstillstand ist die elektrische Maschine bei geöffneter erster und zweiter Kupplung in der Lage, mittels geringer Antriebsdrehzahlen den Fluiddruck im Getriebe aufrechtzuerhalten, was eine Voraussetzung zur Realisierung einer Start-Stopp-Funktion darstellt.

Steuerungstechnisch ist es sinnvoll, die Hybridfahrzeugsteuerung und die Steuerung des Automatikgetriebes aufeinander abzustimmen und diese ggf. zu einer gemeinsamen Steuerung zu kombinieren.

Zusammengefasst bietet das erläuterte elektromotorische Antriebsmodul bzw. ein damit ausgerüstetes Fahrzeug eine umfangreiche Funktionalität bei sehr geringem Platzbedarf. Der Entwicklungsaufwand ist begrenzt, da ein solches Modul aus bekannten Einzelkomponenten aufgebaut werden kann, was auch bei einer Serienfertigung erhebliche Kostenvorteile bietet. Das Antriebsmodul kann bezüglich der von Verbrennungsmotor und dem Getriebe gebildeten Einheit bauraumneutral zwischen dem Verbrennungsmotor und dem Getriebe angeordnet werden. Durch den Einsatz einer nasslaufenden Kupplung gemäß der Beschreibung ist eine hohe Anfahrleistung möglich. Zudem wird mit einer innenlaufenden elektrischen Maschine ein gewünschtes geringes Massenträgheitsmoment realisiert.
Es wird ausdrücklich darauf hingewiesen, dass der Offenbarungsumfang der vorliegenden Patentanmeldung auch zeichnerisch nicht dargestellte Ausführungsbeispiele umfasst, bei denen in einzelnen Ausführungsbeispielen der erläuterten Figuren Elemente oder Anordnungsvarianten auf andere Ausführungsbeispiele übertragbar sind und diese entsprechend ergänzen oder in diesen dargestellte Elemente oder Anordnungsvarianten im Austausch ersetzen. Dieses betrifft insbesondere die Anordnung der Torsionsschwingungsdämpfungsanordnung 150, des Ausgleichselements 140, , die Masseanhäufung 176 sowie die Lagerung des Rotors 24 und die Lagerung von Getriebeeingangswelle 32, zweiter Kupplung 30 und Innenlamellenträger 36.

### Bezugszeichenliste

- 10: Kraftfahrzeugantriebsstrang
- 12: Verbrennungsmotor
- 14: Schaltgetriebe
- 16: Getriebeglocke
- 18a-i: elektromot. Antriebsmodul
- 20: Stator
- 22: elektrische Maschine
- 23: Verschraubung
- 24: Rotor
- 25: Aufnahmeraum
- 26: Permanentmagnete
- 27: Rotorjoch
- 28: erste Kupplung
- 30: zweite Kupplung
- 32: Getriebeeingangswelle
- 34: Außenlamellen
- 36: Innenlamellenträger
- 38: Innenlamellen
- 40: Hydraulikkolben
- 41: Hydraulikzylinder
- 42: Betätigungseinrichtung
- 44: Rückstellelement
- 45: Gehäusebereich

- 46: Druckraum
- 48: Pumpenanordnung
- 50, 52: Ringdichtung
- 54, 56: Ringnut
- 58: Radialflansch
- 60: Kupplungsnabe
- 61: Nietverbindung
- 62, 64: Radiallager
- 66: Rohrabschnitt
- 68: Zwischenwand
- 70: Radiallager
- 72: Rotorträger
- 72a: radialer Abschnitt
- 72b: axialer Abschnitt
- 72c: Rohransatz
- 74: Koppelscheibe
- 76: Sicherungsscheibe
- 78: Bolzen
- 80: Nietverbindung
- 82: Driveplate
- 84: Flexplate
- 86: Kurbelwelle
- 88: Gehäuse

- 89: Lager
- 90: Gehäuseteil
- 92: Pumpennabe
- 91, 93: Schneide
- 94: Betätigungsorgan
- 95: Halterung
- 96: Stufenkolben
- 98: Gehäusenabe
- 100: Ringdichtung
- 102: Ringdichtung
- 104: Radialflansch
- 106: Pilotlager
- 108: Druckleitung
- 109: Radiallager
- 110: Gehäuse
- 112: Kolben
- 114: Einrücklager
- 116: Federhebelplatte
- 118: ringförmige Ausnehmung
- 120: Ringkolben
- 122: Einrückteller
- 124: Trägerabschnitt
- 126: Übetragungselement
- 128: Durchgriffsöffnung

- 130: Lager
- 132: Lager
- 134: Übetragungselement
- 136: Durchgriffsöffnung
- 138: Ringkragen
- 140: Ausgleichselement
- 142: Eingangsteil
- 144: Ausgangsteil
- 146: Federelemente
- 148: Montagezapfen
- 150: Torsionsschwingungsdämpfer
- 152: Schale
- 153: Gehäuse
- 156: Lager
- 155a: Geberstruktur
- 155b: Sensoreinheit
- 156: Federspeicher
- 158: Ausgangsteil
- 160: Zahnrad
- 162: Lager
- 164: Durchgangsbohrung
- 166: Gewindebohrung
- 170: Axialzapfen
- 172: Wälzlager

- 174: Lagerbuchse
- 176: Masseanhäufung

## Patentansprüche

1. Elektromotorisches Antriebsmodul (18a-i) zum Einbau in einen Kraftfahrzeugantriebsstrang mit einem Verbrennungsmotor (12) und einem Getriebe (14), wobei das Antriebsmodul (18) eine elektrische Maschine (22) mit einem Stator (20) und einem Rotor (24) umfasst, und eine erste (28) und eine zweite Kupplung (30) aufweist, durch welche der Rotor (24) wahlweise mit dem Verbrennungsmotor (12) und/oder mit dem Getriebe (14) zur Übertragung eines Drehmoments koppelbar ist und wobei das Antriebsmodul (18a-i) in einem Gehäuse (16) angeordnet ist.

2. Elektromotorisches Antriebsmodul (18a-i) nach Anspruch 1,
**dadurch gekennzeichnet,**
**dass** die elektrische Maschine (22) in Innenläuferbauart ausgeführt ist.

3. Elektromotorisches Antriebsmodul (18a-i) nach Anspruch 1 oder 2,
**dadurch gekennzeichnet,**
**dass** der Stator (20) einen Statorträger (110) aufweist und dass das Antriebsmodul (18a-i) mit diesem Statorträger (110) in dem Gehäuse (16) angeordnet ist.

4. Elektromotorisches Antriebsmodul (18c) nach einem der vorhergehenden Ansprüche,
**dadurch gekennzeichnet,**
**dass** der Statorträger (110) einteilig mit dem Gehäuse (16) ausgeführt ist.

5. Elektromotorisches Antriebsmodul (18a,b, d-i) nach einem der vorhergehenden Ansprüche,
**dadurch gekennzeichnet,**
**dass** das Gehäuse (16) als Getriebeglocke ausgebildet ist.

6. Elektromotorisches Antriebsmodul (18a, c-i) nach einem der vorhergehenden Ansprüche,
**dadurch gekennzeichnet,**
**dass** der Rotor (24) der elektrischen Maschine (22) mittels eines Rotorträgers (72a, b) auf einer mit dem Gehäuse (16) oder dem Statorträger (110) verbindbaren oder verbundenen Gehäusezwischenwand (68) gelagert ist.

7. Elektromotorisches Antriebsmodul (18a-f, h, i) nach einem der vorhergehenden Ansprüche,
**dadurch gekennzeichnet,**
**dass** der Rotor (24) auf einem Gehäuse (88) der zweiten Kupplung (30) gelagert ist.

8. Elektromotorisches Antriebsmodul (18a-i) nach der vorhergehenden Ansprüche,
**dadurch gekennzeichnet,**
**dass** die erste (28) und die zweite Kupplung (30) radial innerhalb eines Aufnahmeraumes (25) der elektrischen Maschine (22) angeordnet sind.

9. Elektromotorisches Antriebsmodul (18a-i) nach der vorhergehenden Ansprüche,
**dadurch gekennzeichnet,**
**dass** die erste (28) und die zweite Kupplung (30) im Wesentlichen innerhalb der axialen Erstreckung der elektrischen Maschine (22) angeordnet sind.

10. Elektromotorisches Antriebsmodul (18a-i) nach einem der vorhergehenden Ansprüche,
**dadurch gekennzeichnet,**
**dass** die zur Drehmomentübertragung mit dem Verbrennungsmotor vorgesehene erste Kupplung (28) als trockene Lamellenkupplung (28) mit einem Innenlamellen (38) tragenden Innenlamellenträger (36) und einem Außenlamellen (34) tragenden Außenlamellenträger (72b) ausgebildet ist.

11. Elektromotorisches Antriebsmodul (18a-i) nach einem der vorhergehenden Ansprüche,
**dadurch gekennzeichnet,**
**dass** die zur Drehmomentübertragung mit dem Getriebe (14) vorgesehene zweite Kupplung (30) als nasslaufende Kupplung ausgebildet ist.

12. Elektromotorisches Antriebsmodul (18d-i) nach einem der vorhergehenden Ansprüche,
**dadurch gekennzeichnet,**
**dass** der Innenlamellenträger (36) der ersten Kupplung (28) auf einem Gehäuseteil (98) der zweiten Kupplung (30) gelagert ist.

13. Elektromotorisches Antriebsmodul (18a-i) nach einem der vorhergehenden Ansprüche,
**dadurch gekennzeichnet,**
**dass** der Rotorträger (72b) als Außenlamellenträger ausgebildet ist.

14. Elektromotorisches Antriebsmodul (18a-i nach einem der vorhergehenden Ansprüche,
**dadurch gekennzeichnet,**
**dass** der Innenlamellenträger (36) zumindest mittelbar drehfest mit der Kurbelwelle (86) des Verbrennungsmotors (12) verbunden oder verbindbar ist.

15. Elektromotorisches Antriebsmodul (18f-i) nach einem der vorhergehenden Ansprüche,
**dadurch gekennzeichnet,**
**dass** im Drehmomentübetragungsweg zwischen dem Innenlamellenträger (36) und der Kurbelwelle (86) des Verbrennungsmotors (12) ein Ausgleichselement (140) zum Ausgleich eines Radialversatzes des Antriebsmoduls zur Kurbelwelle (86) angeordnet ist.

16. Elektromotorisches Antriebsmodul (18) nach einem der vorhergehenden Ansprüche,
**dadurch gekennzeichnet,**
**dass** im Drehmomentübetragungsweg zwischen dem Innenlamellenträger (36) und der Kurbelwelle (86) des Verbrennungsmotors (12) ein Torsionsdämpfer zum Dämpfen von Torsionsschwingungen angeordnet ist.

17. Elektromotorisches Antriebsmodul (18a-i) nach einem der vorhergehenden Ansprüche,
**dadurch gekennzeichnet,**
**dass** im Drehmomentübetragungsweg zwischen dem Innenlamellenträger (36) und der Kurbelwelle (86) des Verbrennungsmotors (12) eine flexible Drehmomentübertragungsplatte (84) angeordnet ist.

18. Elektromotorisches Antriebsmodul (18a,b) nach einem der vorhergehenden Ansprüche,
**dadurch gekennzeichnet,**
**dass** der ersten Kupplung (28) ein hydraulischer Betätigungszylinder (41) zugeordnet ist, dessen Gehäuse von einem Bereich (45) der zweiten Kupplung (30) gebildet wird.

19. Elektromotorisches Antriebsmodul (18a) nach einem der vorhergehenden Ansprüche,
**dadurch gekennzeichnet,**
**dass** der Bereich (45) als sich im Wesentlichen radial erstreckender Gehäusebereich (45) ausgebildet ist und dass der Kolben (40) eine zu dem Gehäusebereich (45) im Wesentlichen korrespondierende Gestalt aufweist.

20. Elektromotorisches Antriebsmodul (18a) nach einem der vorhergehenden Ansprüche,
**dadurch gekennzeichnet,**
**dass** der Betätigungszylinder (41) einen Kolben (40) aufweist, der unmittelbar mit dem Lamellenpaket (34, 38) zusammenwirkt.

21. Elektromotorisches Antriebsmodul (18a,b) nach einem der vorhergehenden Ansprüche,
**dadurch gekennzeichnet,**
**dass** dem Kolben (40) ein Rückstellelement (44) zugeordnet ist.

22. Elektromotorisches Antriebsmodul (18b) nach einem der vorhergehenden Ansprüche,
**dadurch gekennzeichnet,**
**dass** das Gehäuse des Betätigungszylinders (41) eine Gehäusenabe (98) der zweiten Kupplung (30) umfasst und der Kolben (96) um diese als axialer Stufenkolben ausgebildet ist.

23. Elektromotorisches Antriebsmodul (18b) nach einem der vorhergehenden Ansprüche,
**dadurch gekennzeichnet,**
**dass** dem Kolben (96) ein Betätigungsorgan (94) zum Zusammenwirken mit dem Lamellenpaket (34, 38) zugeordnet ist, welches sich an einer am Gehäuse (88) der zweiten Kupplung (30) angeordneten Halterung (95) abstützt.

24. Elektromotorisches Antriebsmodul (18c-i) nach einem der vorhergehenden Ansprüche,
**dadurch gekennzeichnet,**
**dass** der ersten Kupplung (28) ein hydraulischer Betätigungszylinder (41) mit einem Kolben (112) und mit einem dazu feststehenden Gehäuse (43) zugeordnet ist, welches sich an der Gehäusezwischenwand (68) abstützt oder von dieser gebildet wird.

25. Elektromotorisches Antriebsmodul (18c-i) nach einem der vorhergehenden Ansprüche,
**dadurch gekennzeichnet,**
**dass** der Kolben (112) zumindest mittelbar mit einem axial verlagerbaren Ausrücklager (114) in Wirkverbindung steht.

26. Elektromotorisches Antriebsmodul (18d-i) nach einem der vorhergehenden Ansprüche,
**dadurch gekennzeichnet,**
**dass** das Ausrücklager (114) auf einem Rohrabschnitt (66) der Gehäusezwischenwand (68) angeordnet ist.

27. Elektromotorisches Antriebsmodul (18c-f) nach einem der vorhergehenden Ansprüche,
**dadurch gekennzeichnet,**
**dass** der Rotorträger (72a) eine Durchgriffsöffnung (128) zur Betätigung der ersten Kupplung (28) aufweist.

28. Elektromotorisches Antriebsmodul (18a,c,d,f-i) nach einem der vorhergehenden Ansprüche,
**dadurch gekennzeichnet,**
**dass** die erste Kupplung (28) als "Normally-Open-Kupplung" zur gedrückten Betätigung ausgeführt ist.

29. Elektromotorisches Antriebsmodul (18b,e) nach einem der vorhergehenden Ansprüche,
**dadurch gekennzeichnet,**
**dass** die erste Kupplung (28) als "Normally-Closed-Kupplung" ausgeführt ist.

30. Elektromotorisches Antriebsmodul (18e) nach Anspruch 29,
**dadurch gekennzeichnet,**
**dass** die Gehäusezwischenwand (68) eine Durchgriffsöffnung (134) zur gezogenen Betätigung die ersten Kupplung (28) aufweist.

31. Elektromotorisches Antriebsmodul (18a-i) nach einem der vorhergehenden Ansprüche,
**dadurch gekennzeichnet,**
**dass** die zweite Kupplung (30) auf einer Eingangswelle (32) eines Getriebes (14) gelagert oder lagerbar ist.

32. Elektromotorisches Antriebsmodul (18b) nach einem der vorhergehenden Ansprüche,
**dadurch gekennzeichnet,**
**dass** die zweite Kupplung (30) mit einer Gehäusenabe (98) in der Kurbelwelle (86) des Verbrennungsmotors (12) gelagert oder lagerbar ist.

33. Elektromotorisches Antriebsmodul (18) nach einem der vorhergehenden Ansprüche,
**dadurch gekennzeichnet,**
**dass** der zweiten Kupplung (30) ein Torsionsdämpfer zugeordnet ist.

34. Elektromotorisches Antriebsmodul (18a-i) nach einem der vorhergehenden Ansprüche,
**dadurch gekennzeichnet,**
**dass** ein Abtriebsorgan der zweiten Kupplung (30) mit der Eingangswelle (32) des Getriebes (14) gekoppelt oder koppelbar ist.

35. Elektromotorisches Antriebsmodul (18a-i) nach einem der vorhergehenden Ansprüche,
**dadurch gekennzeichnet,**
**dass** zur Betätigung des hydraulisches Betätigungszylinders (41) der ersten Kupplung (28) dem Antriebsmodul (18) eine unabhängig vom Betriebszustand des Verbrennungsmotors (12) arbeitende Hydraulikpumpe (48) zugeordnet ist.

36. Elektromotorisches Antriebsmodul (18a,b) nach einem der vorhergehenden Ansprüche,
**dadurch gekennzeichnet,**
**dass** der Betätigungszylinder (12) der ersten Kupplung (28) mit einem in der Getriebeeingangswelle (14) ausgebildeten Fluidkanal in einer Strömungsverbindung steht oder bringbar ist.

37. Elektromotorisches Antriebsmodul (18g-i) nach einem der vorhergehenden Ansprüche,
**dadurch gekennzeichnet,**
**dass** der Rotor (24) der elektrischen Maschine (22) drehfest mit dem Eingangsteil (153) einer Torsionsschwingungsdämpfungsanordnung (150) verbunden ist.

38. Elektromotorisches Antriebsmodul (18g-i) nach einem der vorhergehenden Ansprüche,
**dadurch gekennzeichnet,**
**dass** das Ausgangsteil (158) der Torsionsschwingungsdämpfungsanordnung (150) mit dem Eingangsteil (88) der zweiten Kupplung (30) drehfest verbunden ist.

39. Elektromotorisches Antriebsmodul (18g-i) nach Anspruch 38,
**dadurch gekennzeichnet,**
**dass** die Verbindung lösbar ausgeführt ist.

40. Elektromotorisches Antriebsmodul (18g) nach einem der vorhergehenden Ansprüche,
**dadurch gekennzeichnet,**
**dass** das Eingangsteil (153) der Torsionsschwingungsdämpfungsanordnung (150) zumindedst mittelbar an dem Gehäuse (14) gelagert ist.

41. Elektromotorisches Antriebsmodul (18h, i) nach einem der vorhergehenden Ansprüche,
**dadurch gekennzeichnet,**
**dass** das Eingangsteil (153) der Torsionsschwingungsdämpfungsanordnung (150) an dem Eingangsteil (88) der zweiten Kupplung (30) gelagert ist.

42. Elektromotorisches Antriebsmodul (18g-i) nach einem der vorhergehenden Ansprüche,
**dadurch gekennzeichnet,**
**dass** der Rotorträger (72b) zumindest partiell ein Element eines Gehäuses (153) der Torsionsschwingungsdämpfungsanordnung (150) bildet.

43. Elektromotorisches Antriebsmodul (18) nach einem der vorhergehenden Ansprüche,
**dadurch gekennzeichnet,**
**dass** die Torsionsschwingungsdämpfungsanordnung integral mit der zweiten Kupplung (30) ausgebildet ist.

44. Elektromotorisches Antriebsmodul (18g) nach einem der vorhergehenden Ansprüche,
**dadurch gekennzeichnet,**
**dass** das Gehäuse (153) eine Geberstruktur (155a) zur berührungsfreien Abtastung durch eine Sensoreinheit (155b) zur Gewinnung einer Rotorlageinformation aufweist.

45. Elektromotorisches Antriebsmodul (18h) nach einem der vorhergehenden Ansprüche,
**dadurch gekennzeichnet,**
**dass** der Innenlamellenträger (36) drehbar an der Kurbelwelle (86) gelagert ist.

46. Elektromotorisches Antriebsmodul (18i) nach einem der vorhergehenden Ansprüche,
**dadurch gekennzeichnet,**
**dass** die Flexplate (84) und/oder die Driveplate (82) eine Masseanhäufung (176) aufweisen.

47. Elektromotorisches Antriebsmodul (18a-f) nach einem der vorhergehenden Ansprüche,
**dadurch gekennzeichnet,**
**dass** das Antriebsmodul (18) als vorgefertigte Baueinheit zur Montage in einem Kraftfahrzeugantriebsstrang vorliegt.
